Europäisches Patentamt

European Patent Office

Office européen des brevets

(11) Veröffentlichungsnummer: **0 199 906**
**A1**

## (12) EUROPÄISCHE PATENTANMELDUNG

(21) Anmeldenummer: **86101643.4**

(22) Anmeldetag: **08.02.86**

(51) Int. Cl.⁴: **F 16 C 5/00**

(30) Priorität: 26.04.85 CH 1793/85

(43) Veröffentlichungstag der Anmeldung:
05.11.86 Patentblatt 86/45

(84) Benannte Vertragsstaaten:
GB IT

(71) Anmelder: GEBRÜDER SULZER AKTIENGESELLSCHAFT
Zürcherstrasse 9
CH-8401 Winterthur(CH)

(72) Erfinder: Aeberli, Kaspar Hans
Hochrütistrasse 8
CH-8304 Wallisellen(CH)

(74) Vertreter: Dipl.-Ing. H. Marsch Dipl.-Ing. K. Sparing
Dipl.-Phys.Dr. W.H. Röhl Patentanwälte
Rethelstrasse 123
D-4000 Düsseldorf(DE)

(54) **Kreuzkopfzapfenlager für Kolbenmaschinen.**

(57) Ein Kreuzkopfzapfenlager für Kolbenmaschinen, insbesondere für Dieselbrennkraftmaschinen, welches zum Schmieren mit durch eine Schmierleitung (12, 15, 17, 18) unter Druck zugeführtem Schmieröl ausgebildet ist. Wenigstens zwei in einem Lager angeordnete, direkt in die Lagerfläche (6) mündende Schmiertaschen (20, 21; 25, 26; 29; 30, 31; 32; 33, 34, 35) sind an die Schmierleitung (12, 15, 17, 18) angeschlossen.

FIG. 1

FIG. 2

EP 0 199 906 A1

P.5950/Nl/td

Gebrüder Sulzer Aktiengesellschaft, Winterthur (Schweiz)

Kreuzkopfzapfenlager für Kolbenmaschinen

Die Erfindung betrifft ein Kreuzkopfzapfenlager für Kolbenmaschinen, insbesondere für Dieselbrennkraftmaschinen,
welches zum Schmieren mit durch eine Schmierleitung unter
Druck zugeführtem Schmieröl ausgebildet ist.

Ein solches Lager ist z.B. in der CH-PS 540 442 offenbart.
Dabei ist eine Mehrzahl von in einem Lagerteil angeordneten,
direkt in die Lagerfläche mündenden Schmierbohrungen vorgesehen, die an die Schmierleitung angeschlossen sind.
Dieser Stand der Technik weist jedoch den Nachteil auf,
dass der Druckaufbau durch die engbenachbarten Schmierbohrungen unterbrochen wird. Hierdurch entsteht eine Vielzahl von "Druckbergen" mit entsprechender lokaler Belastung
der Lagerfläche und vorzeitiger Materialermüdung.

Aufgabe der Erfindung ist es, das eingangs genannte Kreuzkopfzapfenlager so zu verbessern, dass die Materialermüdung verringert und die Lebensdauer des Lagers erhöht wird.

Zur Lösung dieser Aufgabe dient die im Kennzeichen des Anspruchs 1 aufgeführte Massnahme. Die Unteransprüche betreffen vorteilhafte Weiterbildungen.

- 2 -

Hierdurch lässt sich erreichen, dass zwischen den Schmiertaschen ein zusammenhängender "Druckberg" entsteht, welcher
eine geringere maximale Amplitude aufweist als im Falle
des genannten Standes der Technik. Hierdurch lässt sich
die Tragfähigkeit des Lagers bei gleichen Aussenabmessungen erhöhen. Durch die niedrigere seitliche Gradiente des
ungestörten Druckberges wird die lokale Belastung des Lagermetalls verringert und somit die Sicherheit des Lagers
in bezug auf Materialermüdung verbessert.

Die nähere Erläuterung der Erfindung erfolgt anhand von
Ausführungsbeispielen in Verbindung mit nachstehender
Zeichnung. Es zeigen:

Fig. 1      einen Schnitt eines Kreuzkopfzapfenlagers,

Fig. 2      einen Schnitt des Lagers nach der Linie II-II

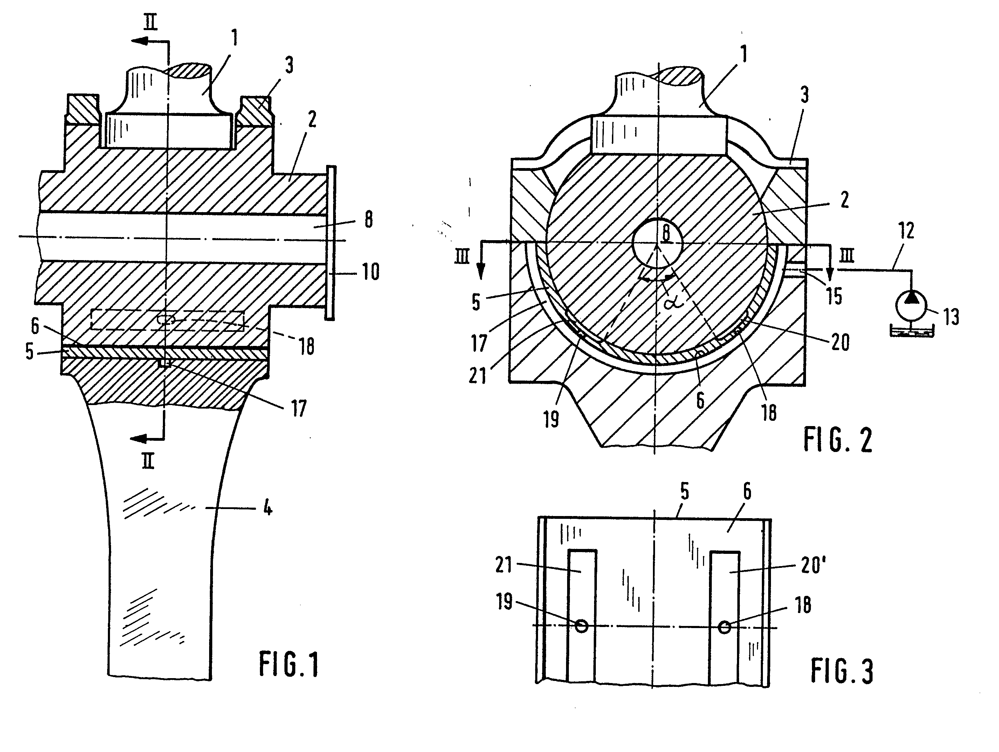

            in Fig. 1,

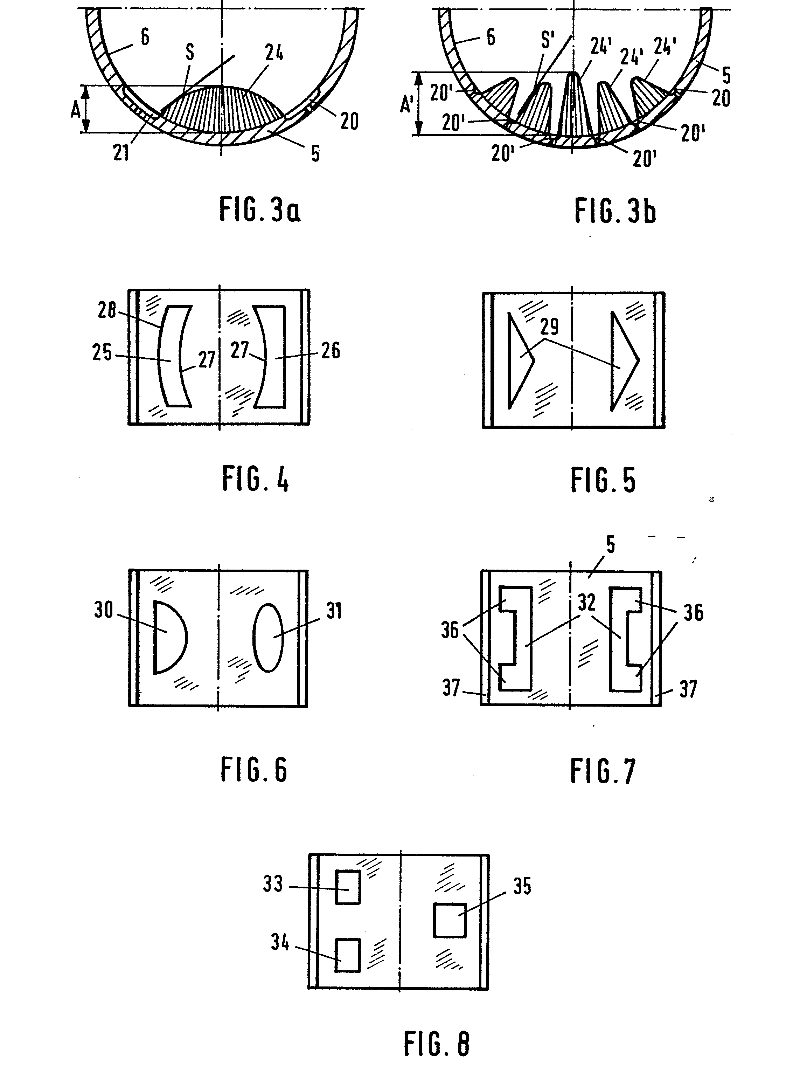

Fig. 3      einen Grundriss des Lagersattels des Lagers
            nach der Linie III-III in Fig. 2,

Fig. 3a     den Druckaufbau des Lagers nach Fig. 3,

Fig. 3b     eine entsprechende Darstellung des Druckaufbaus in einem Lager gemäss dem genannten Stand
            der Technik,

Fig. 4 - 8 verschiedene Varianten des Lagers nach Fig. 3.

Das in Fig. 1 dargestellte Kreuzkopfzapfenlager einer Dieselbrennkraftmaschine, welches in bekannter Weise mit einer
Kolbenstange 1 verbunden ist, enthält einen hohlen Lager-

- 3 -

zapfen 2 sowie ein Lagergehäuse 3 mit einer Pleuelstange 4. Das Lagergehäuse 3 enthält in bekannter Weise eine Lagerschale 5, welche eine Lagerfläche 6 aus Lagermetall aufweist. Der Hohlraum 8 des Lagerzapfens ist an seinen Enden durch Deckel 10 verschlossen. Das Lagergehäuse 3 ist über eine Bohrung 15 in bekannter Weise an eine Schmierleitung 12 mit einer Schmierpumpe 13 angeschlossen. Hiezu dient eine bekannte bewegliche Verbindung, die z.B. Gelenkrohre oder einen Schlauch aufweisen kann.

Ueber die Bohrung 15 kann das Schmieröl in eine Umfangsnut 17 gelangen, an welche sich radiale Bohrungen 18, 19 anschliessen. Die radialen Bohrungen münden in zwei in der Lagerfläche 6 der Lagerschale 5 ausgebildeten Schmiertaschen 20, 21, die zur Aufnahme des durch die Bohrungen 18, 19 zugeführten Schmieröles dienen. Von den Schmiertaschen 20, 21 wird das Oel in bekannter Art und Weise axial nach aussen gedrückt und in einer Oelauffangwanne aufgenommen bzw. zur Pumpe 13 zurückgeführt.

Wie aus Fig. 3 hervorgeht, sind die Schmiertaschen 20, 21, welche direkt in der Lagerfläche 6 münden, etwa im Randbereich der tragenden Lagerfläche angeordnet. Dabei ist die winkelmässige Entfernung $\alpha$ benachbarter Schmiertaschen 20, 21 mindestens ca. 40° (Fig. 2).

Wie aus Fig. 3a hervorgeht, ist der "Druckberg" 24 zwischen den Schmiertaschen 20, 21 zusammenhängend und weist eine relativ niedrige maximale Amplitude A auf, während in Fig. 3b bei der Ausführung gemäss dem Stand der Technik zwischen den Schmieröffnungen 20' mehrere "Druckberge" 24' entstehen, deren maximale Amplitude A' wesentlich grösser ist.

- 4 -

Weiter ist die Steigung S der Druckgradiente in Fig. 3a wesentlich geringer als der entsprechende Wert S' in Fig. 3b, was ebenfalls eine geringere Lagerbeanspruchung bwirkt.

Beim Ausführungsbeispiel nach Fig. 4 weisen die Schmiertaschen 25, 26 konkave bzw. konvexe Krümmungen 27, 28 auf.

Beim Ausführungsbeispiel nach Fig. 5 weisen die Schmiertaschen 29 dreieckförmigen Umriss auf.

Beim Ausführungsbeispiel nach Fig. 6 weisen die Schmiertaschen 30, 31 halbkreisförmigen bzw. elliptischen Umriss auf.

Beim Ausführungsbeispiel nach Fig. 7 weisen die Schmiertaschen 32 den Umriss eines U-Profils auf, dessen Schenkel 36 gegen den Rand 37 der tragenden Lagerfläche 5 gerichtet sind.

Schliesslich zeigt Fig. 8 eine Abwandlung des Ausführungsbeispiels nach Fig. 3 mit drei rechteckigen Schmiertaschen 33, 34, 35.

- 5 -

Patentansprüche

1. Kreuzkopfzapfenlager für Kolbenmaschinen, insbesondere für Dieselbrennkraftmaschinen, welches zum Schmieren mit durch eine Schmierleitung unter Druck zugeführtem Schmieröl ausgebildet ist, g e k e n n z e i c h n e t  durch wenigstens zwei in einem Lager angeordnete, direkt in die Lagerfläche (6) mündende Schmiertaschen (20, 21; 25, 26; 29; 30, 31; 32; 33, 34, 35), die an die Schmierleitung (12, 15, 17, 18) angeschlossen sind.

2. Kreuzkopfzapfenlager nach Anspruch 1, dadurch gekennzeichnet, dass der Winkelabstand zwischen den Schmiertaschen (20, 21; 25, 26; 29; 30, 31; 32; 33, 34, 35) wenigstens ca. 40° beträgt.

3. Kreuzkopfzapfenlager nach Anspruch 1, dadurch gekennzeichnet, dass wenigstens eine Schmiertasche (20, 21; 25, 26; 30, 31; 32; 33, 34, 35) im Randbereich (37) der tragenden Lagerfläche (6) angeordnet ist.

4. Kreuzkopfzapfenlager nach Anspruch 1, dadurch gekennzeichnet, dass die Schmiertaschen (20, 21; 32, 33, 34, 35) rechteckigen Umriss aufweisen.

5. Kreuzkopfzapfenlager nach Anspruch 1, dadurch gekennzeichnet, dass der Umriss der Schmiertaschen (25, 26; 30, 31) wenigstens eine konkave und/oder konvexe Krümmung (25, 27) aufweist.

6. Kreuzkopfzapfenlager nach Anspruch 1, dadurch gekennzeichnet, dass die Schmiertaschen (30, 31) halbkreisförmigen bzw. elliptischen Umriss aufweisen.

- 6 -

7. Kreuzkopfzapfenlager nach Anspruch 1, dadurch gekennzeichnet, dass die Schmiertaschen (29) dreieckförmigen
Umriss aufweisen.

8. Kreuzkopfzapfenlager nach Anspruch 1, dadurch gekennzeichnet, dass die Schmiertaschen (32) den Umriss eines
U-Profils aufweisen, dessen Schenkel (36) gegen den Rand
(37) der tragenden Lagerfläche (6) gerichtet sind.

0199906

FIG.1

FIG. 2

FIG.3

0199906

**FIG. 3a**

**FIG. 3b**

**FIG. 4**

**FIG. 5**

**FIG. 6**

**FIG. 7**

**FIG. 8**

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| Y | GB-A-2 020 783  (SULZER)<br>* Seite 2, Zeilen 23-85;  Figuren 1,2,4 * | 1 | F 16 C    5/00 |
| Y | DE-A-3 024 306  (M.A.N.)<br>* Seite 6, Zeilen 15-23; Seite 8, Zeilen 14-16; Figur 1 * | 1,2,4 | |
| Y | DE-B-2 136 935  (SULZER)<br>* Das ganze Dokument * & CH - A - 540 442 (Cat. D) | 1 | |
| Y | FR-A-  800 533  (FUSION-MOTEURS)<br>*  Seite 2, Zeilen 21-45; Figur 1 * | 1 | |
| Y | DE-B-1 266 062  (MOTOREN-WERKE)<br>* Spalte 3, Zeilen 11-14; Figuren 1,2 * | 1,4 | RECHERCHIERTE SACHGEBIETE (Int. Cl.4)<br><br>F 16 C<br>F 16 J |
| A | FR-A-  951 614  (HOYT METAL)<br>* Seite 4, Zeile 99  -  Seite  5, Zeile 16; Figur 1 * | 1-4 | |
| A | GB-A-1 018 678  (GLACIER METAL)<br>*  Seite 2, Zeilen 63-76; Figur 2 * | 5 | |

-/-

Der vorliegende Recherchenbericht wurde für alle Patentansprüche erstellt

| Recherchenort<br>DEN HAAG | Abschlußdatum der Recherche<br>01-08-1986 | Prüfer<br>BARON C. |
|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-1 663 528 (TACCHELLA) <br> * Seite 2, Zeilen 55-59; Figur 1 * | 1 | |
| | --- | | |
| A | GB-A-1 178 682 (NATIONAL RESEARCH) <br> * Seite 2, Zeilen 8-15; Figuren * | 1 | |
| | --- | | |
| A | DE-A-2 409 572 (SULZER) <br> * Das ganze Dokument * | 1 | |
| | ----- | | |

RECHERCHIERTE SACHGEBIETE (Int. Cl.4)

Der vorliegende Recherchenbericht wurde für alle Patentansprüche erstellt

| Recherchenort <br> DEN HAAG | Abschlußdatum der Recherche <br> 01-08-1986 | Prüfer <br> BARON C. |
|---|---|---|